# EUROPÄISCHE PATENTSCHRIFT

(11) **EP 2 217 472 B1**
(45) Veröffentlichungstag und Bekanntmachung des Hinweises auf die Patenterteilung: **27.02.2013**
(21) Anmeldenummer: 08804912.7
(22) Anmeldetag: 30.09.2008
(51) Int. Cl.: B60S 1/08

(54) **STEUERUNGSVERFAHREN UND STEUERUNGSVORRICHTUNG FÜR EINE SCHEIBENWISCHVORRICHTUNG**
CONTROL METHOD AND CONTROL DEVICE FOR A WINDSHIELD WIPER DEVICE
PROCÉDÉ DE COMMANDE ET DISPOSITIF DE COMMANDE POUR UN DISPOSITIF ESSUIE-GLACE

(30) Priorität: 30.11.2007 DE 102007057745
(43) Veröffentlichungstag der Anmeldung: 18.08.2010
(73) Patentinhaber: Robert Bosch GmbH, 70442 Stuttgart (DE)
(72) Erfinder: LOEWE, Andreas, 31246 Lahstedt (DE)
(86) Internationale Anmeldenummer: PCT/EP2008/063074
(87) Internationale Veröffentlichungsnummer: WO 2009/068349

(56) Entgegenhaltungen:
- WO-A-2004/007255
- WO-A-2007/012299
- DE-A1- 10 303 046
- DE-A1-102006 016 774

## Beschreibung

### Stand der Technik

Die vorliegende Erfindung betrifft ein Steuerungsverfahren gemäß dem Oberbegriff des Patentanspruchs 1 und eine Steuerungsvorrichtung gemäß dem Oberbegriff des Patentanspruchs 7 für eine Scheibenwischvorrichtung.

Ein solches Steuerungsverfahren beschreibt die DE 10 2006 016 774. Sie beschreibt einen Regensensor, der in einem Fahrzeug angeordnet ist und eine Kamera und einen Prozessor aufweist. Die Kamera nimmt durch eine Windschutzscheibe eines Fahrzeugs ein Bild einer Szene außerhalb des Fahrzeugs mit einer unendlichen Brennweite auf. Der Prozessor erfasst Regen auf der Grundlage eines Streuungsgrads von Intensitäten von Pixeln in dem Bild gegenüber einer durchschnittlichen Intensität von Pixeln.

Ein Steuerungsverfahren für eine Scheibenwischvorrichtung ist aus der DE 102 30 200 bekannt. Eine Steuerungsvorrichtung analysiert den Kontrast eines optischen Abbilds, welches eine Windschutzscheibe, insbesondere die Windschutzscheibe eines Kraftfahrzeugs, betrifft, um aus dem Kontrast auf die Eigenschaften von Objekten auf einer Windschutzscheibe zu schließen und die Scheibenwischvorrichtung dementsprechend zu steuern.

Ein Nachteil liegt darin, daß die Analyse auch Objekte einbezieht, die sich nicht auf der Windschutzscheibe befinden. Die Analyse ist dementsprechend umfangreich und zeitaufwendig.

### Offenbarung der Erfindung

Der vorliegenden Erfindung liegt die Aufgabe zugrunde, ein verbessertes Steuerungsverfahren und eine verbesserte Steuerungsvorrichtung für eine Scheibenwischvorrichtung zu schaffen, die geeignet sind, weitere Objekte auf einer Windschutzscheibe zu identifizieren.

Die der Erfindung zugrunde liegende Aufgabe wird durch ein Steuerungsverfahren mit den Merkmalen des kennzeichnenden Teils des Patentanspruchs 1 und eine Steuerungsvorrichtung mit den Merkmalen des kennzeichnenden Teils des Patentanspruchs 7 gelöst.

Die vorliegende Erfindung betrifft ein Steuerungsverfahren für eine Scheibenwischvorrichtung, welches die folgenden Schritte aufweist: Erzeugen eines ersten optischen Abbilds eines Abbildungsbereichs zu einer ersten Zeit; Erzeugen eines zweiten optischen Abbilds des Abbildungsbereichs zu einer zweiten Zeit; Vergleichen des ersten optischen Abbilds mit dem zweiten optischen Abbild; Erzeugen eines dritten optischen Abbilds des Abbildungsbereichs zu einer dritten Zeit nach einer Betätigung eines Scheibenwischers; vergleichen des dritten optischen Abbilds mit dem ersten optischen Abbild zum Erkennen eines Objekts, welches sowohl in dem dritten optischen Abbild als auch in dem ersten optischen Abbild abgebildet ist; und Ausgeben eines Scheibenwischerbetätigungsbefehls in Abhängigkeit von einem Ergebnis des Vergleichens ohne Berücksichtigung des Objekts. Der Vergleich von zwei optischen Abbildern zu unterschiedlichen Zeitpunkten ermöglicht es, Objekte, die sich relativ zu einer Kamera, welche die optischen Abbilder erzeugt, bewegen, von Objekten zu unterscheiden, die sich nicht relativ zu der Kamera bewegen. Bei solchen Objekten kann es sich beispielsweise um Fahrbahnmarkierungen oder vorbeifahrenden Autos handeln, die auch von der Kamera erfaßt werden. Nachfolgend werden nur Objekte berücksichtigt, die sch nicht relativ zu der Kamera bewegen. Der Analyseaufwand wird dadurch verringert.

Alternativ kann auch das zweite optische Abbild anstelle des ersten optischen Abbilds verwendet werden. Objekte, die sich durch den Scheibenwischer nicht entfernen lassen, lösen somit keinen Wischvorgang mehr aus. Ebenfalls lösen Objekte, die beispielsweise auf der Motorhaube vorgesehen sind und scharf abgebildet werden, keinen Wischvorgang aus. Die Bildpunkte des Objekts, welches sowohl in dem ersten optischen Abbild als auch in dem zweiten optischen Abbild vorhanden ist, können auch dauerhaft gespeichert werden, so daß sie selbst nach dem Neustart des Kraftfahrzeugs keinen Wischvorgang auslösen.

In einer Weiterbildung der bevorzugten Ausführungsform wird ein erstes Kantenbild aus dem ersten optischen Abbild erzeugt, und wird ein zweites Kantenbild aus dem zweiten optischen Abbild erzeugt. Kantenbilder sind zur Unterscheidung von einzelnen Objekten besonders geeignet.

In noch einer Weiterbildung der bevorzugten Ausführungsform sind das erste optische Abbild und das zweite optische Abbild in Form von Bildpunkten gespeichert, und sind das erste Kantenbild und das zweite Kantenbild in Form von Bildpunkten gespeichert. Bildpunkte lassen sich besonders leicht auswerten und verarbeiten.

In noch einer Weiterbildung der bevorzugten Ausführungsform wird beim Schritt des Vergleichens jeweils ein Bildpunkt des ersten Kantenbilds mit einem entsprechenden Bildpunkt des zweiten Kantenbilds multipliziert. Die Multiplikation ermöglicht es, ein gemeinsames Objekt in dem ersten Abbild und dem zweiten Abbild besonders leicht zu identifizieren.

In noch einer Weiterbildung der bevorzugten Ausführungsform umfaßt das Steuerungsverfahren die folgenden weiteren Schritte: Analysieren eines abgebildeten Objekts, um zu erkennen, ob das Objekt ein Regentropfen ist oder nicht; und Ausgeben eines Reinigungsmittelabgabebefehls in Abhängigkeit von einem Ergebnis des Analysierens. Die Analyse des abgebildeten Objekts ermöglicht es, Regentropfen auf der Windschutzscheibe von sonstiger Verschmutzung zu unterscheiden. Reinigungsmittel wird dann nur abgegeben, wenn dieses unbedingt erforderlich ist.

Ferner ist eine Steuerungsvorrichtung für eine Scheibenwischvorrichtung denkbar, wobei die Steuerungsvorrichtung eingerichtet ist, ein erstes optisches Abbild eines Abbildungsbereichs zu einer ersten Zeit mit einem zweiten optischen Abbilds des Abbildungsbereichs zu einer zweiten Zeit zu vergleichen und einen Scheibenwischerbetätigungsbefehl in Abhängigkeit von einem Ergebnis des Vergleichens auszugeben.

### Kurze Beschreibung der Zeichnung

Im Folgenden wird die Erfindung mit Bezugnahme auf die Zeichnung näher beschrieben. Es zeigen:
FIG. 1 eine schematische Ansicht einer Scheibenwischvorrichtung bei einer Frontscheibe eines Kraftfahrzeugs;
Fig. 2A einen Ausschnitt eines ersten optisches Abbilds zu einem ersten Zeitpunkt;
Fig. 2B einen Ausschnitt eines zweites optisches Abbild zu einem zweiten Zeitpunkt;
FIG. 2C ein Kantenbild des Ausschnitts des ersten optischen Abbilds aus FIG. 2A;
FIG. 2D ein Kantenbild des Ausschnitts des zweiten optischen Abbilds aus FIG. 2B;
FIG. 2E ein erstes Multiplikationsbild des ersten Kantenbilds und des zweiten Kantenbilds;
Fig. 3A einen weiteren Ausschnitt des ersten optisches Abbilds zu dem ersten Zeitpunkt;
Fig. 3B einen weiteren Ausschnitt des zweiten optisches Abbilds zu dem zweiten Zeitpunkt;
FIG. 3C ein Kantenbild des weiteren Ausschnitts des ersten optisches Abbilds aus FIG. 3A;
FIG. 3D ein Kantenbild des weiteren Ausschnitts des zweiten optisches Abbilds aus FIG. 3B;
FIG. 3E ein zweites Multiplikationsbild des Kantenbilds aus

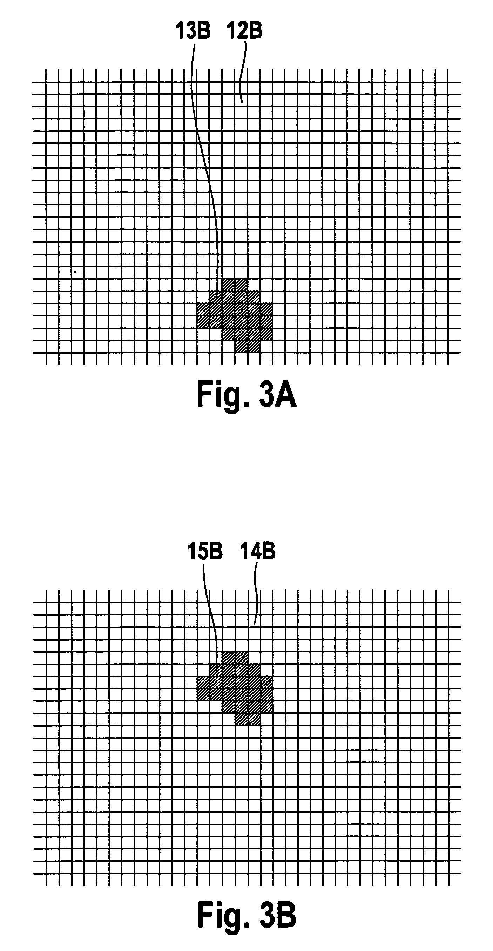

FIG. 3A und des Kantenbilds aus FIG. 3B;

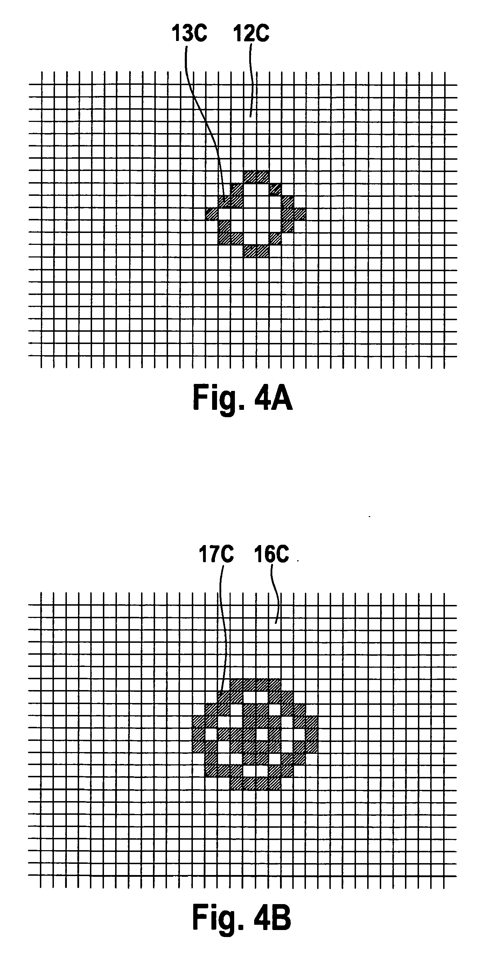

Fig. 4A einen weiteren Ausschnitt des ersten optisches Abbilds, welches einen Regentropen abbildet;
FIG. 4B ein Kantenbild des weiteren Ausschnitts des ersten optisches Abbilds aus FIG. 4A;

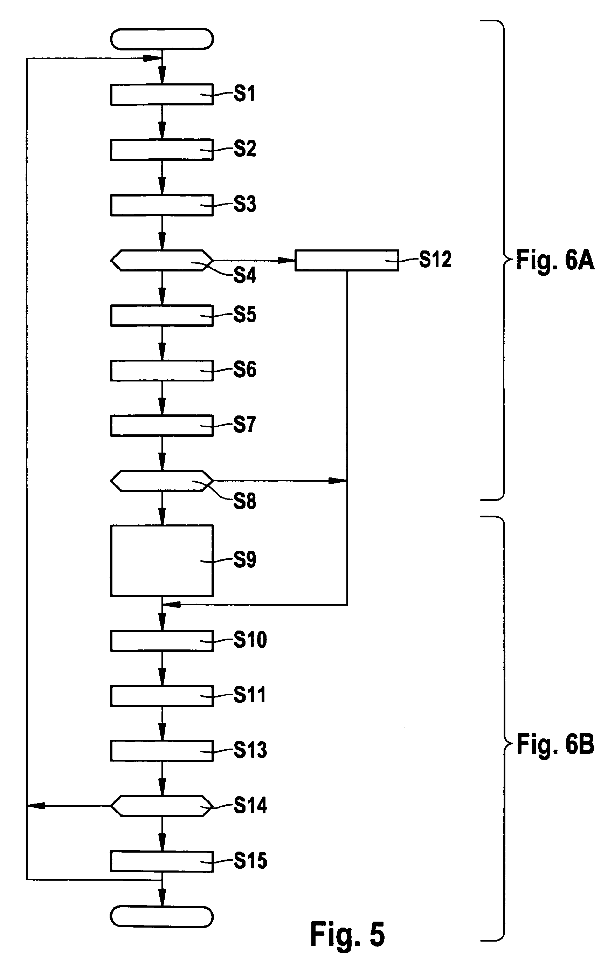

FIG. 5 ein Flußdiagramm eines Steuerungsverfahrens;

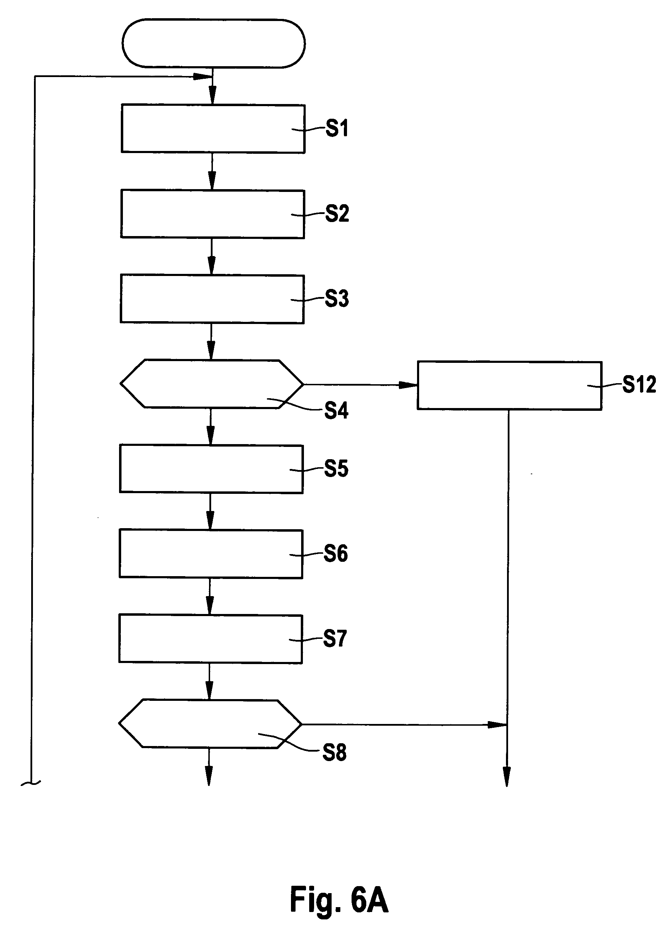

FIG. 6A eine Detailansicht des Flußdiagramms aus FIG. 5; und

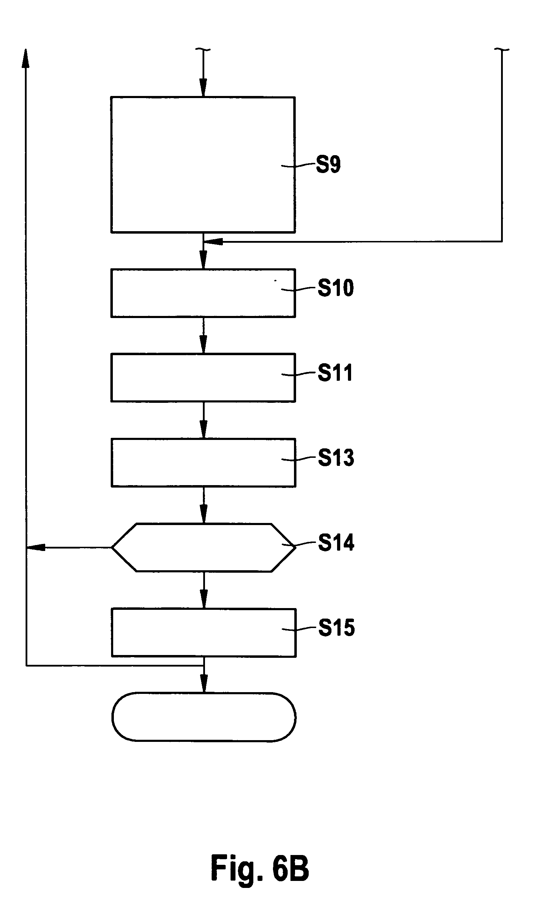

FIG. 6B eine weitere Detailansicht des Flußdiagramms aus FIG. 5.

### Ausführungsformen der Erfindung

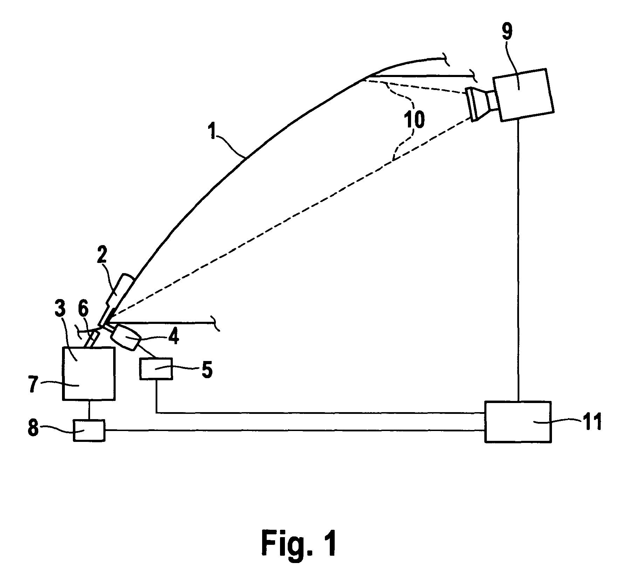

FIG. 1 zeigt eine schematische Ansicht einer Scheibenwischvorrichtung bei einer Frontscheibe 1 eines Kraftfahrzeugs. Die Scheibenwischvorrichtung umfaßt mindestens einen Scheibenwischer 2 und eine Reinigungsmittelabgabevorrichtung 3. Der Scheibenwischer 2 wird von einem Scheibenwischermotor 4 angetrieben, der durch eine Motorsteuerung 5 gesteuert wird. Die Reinigungsmittelabgabevorrichtung 3 umfaßt mindestens eine Düse 6 und eine Reinigungsmittelzufuhrvorrichtung 7, in der ein Aufbewahrungsbehälter für Reinigungsmittel integriert ist. Die Reinigungsmittelzufuhrvorrichtung 7 wird durch eine Abgabevorrichtungssteuerung 8 gesteuert und führt Reinigungsmittel zu der mindestens einen Düse 6 zu. Die Frontscheibe 1 wird von einer Kamera 9 in gewissen Zeitintervallen aufgenommen. Die Kamera 9 ist so eingestellt, daß sie einen Bereich im Inneren des Kraftfahrzeugs bis zu der Frontscheibe 1, der durch die gestrichelten Linien 10 abgegrenzt ist, scharf abbildet. Diese Schärfeeinstellung der Kamera 9 bewirkt, daß die Kanten von Objekten außerhalb des Kraftfahrzeugs entfernt von der Frontscheibe 1 nicht erfaßt werden. Die Kamera 9 ist mit einer Auswertungsvorrichtung bzw. zentralen Steuerungsvorrichtung 11 verbunden. Die Auswertungsvorrichtung 11 umfaßt eine Von-Neumann-Maschine, die eine zentralen Prozessor, einen Eingabe/Ausgabe-Prozessor, Verbindungswege (Busse) und einen Arbeitsspeicher aufweist. Der zentrale Prozessor arbeitet dabei ein Maschineprogramm ab, das in dem Arbeitspeicher gespeichert ist und ein Steuerungsverfahren umfaßt. Der Eingabe/Ausgabe-Prozessor sorgt für den Empfang von Daten von der Kamera 9 und für das Aussenden von Befehlen an die Motorsteuerung 5 und die Abgabevorrichtungssteuerung 8. Statt einer Von-Neumann-Maschine kann auch eine Maschine mit einer anderen Architektur, z.B. Harvard-Architektur, verwendet werden, oder das Programm kann direkt durch die Hardware realisiert werden. Eine zusätzliche Infrarot-Leuchte kann bei Dunkelheit die Frontscheibe 1 bestrahlen, so daß das Steuerungsverfahren auch nachts einsetzbar ist.

FIG. 5 zeigt ein Flußdiagramm des Steuerungsverfahrens, welches der zentrale Prozessor der Auswertungsvorrichtung 11 abarbeitet. Detailansichten des Flußdiagramms sind in FIG. 6A und FIG. 6B detailliert dargestellt.

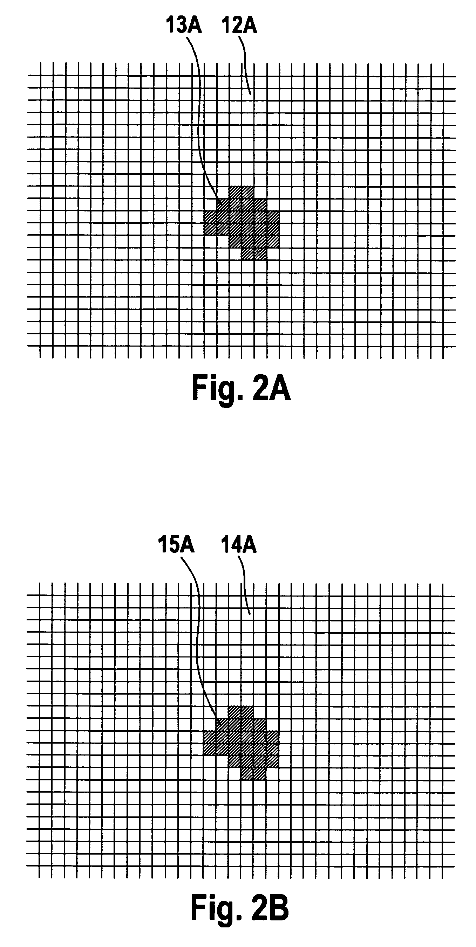

Im Schritt S1 nimmt die Kamera 9 ein erstes optisches Abbild Ab1 zu einer ersten Zeit t1 auf. Ein Ausschnitt des ersten optischen Abbilds Ab1 ist in Fig. 2A gezeigt. Dieser Ausschnitt und die folgenden Ausschnitte umfassen mehrere quadratische Bildpunkte, sogenannte Pixel, die verschiedene Graustufen haben können und jeweils einen identisch angeordneten Bereich der von der Kamera aufgenommenen Bilder darstellen. Einer der Bildpunkte des Ausschnitts ist mit dem Bezugszeichen 12A bezeichnet. Ein abgebildetes Objekt ist mit dem Bezugszeichen 13A bezeichnet.

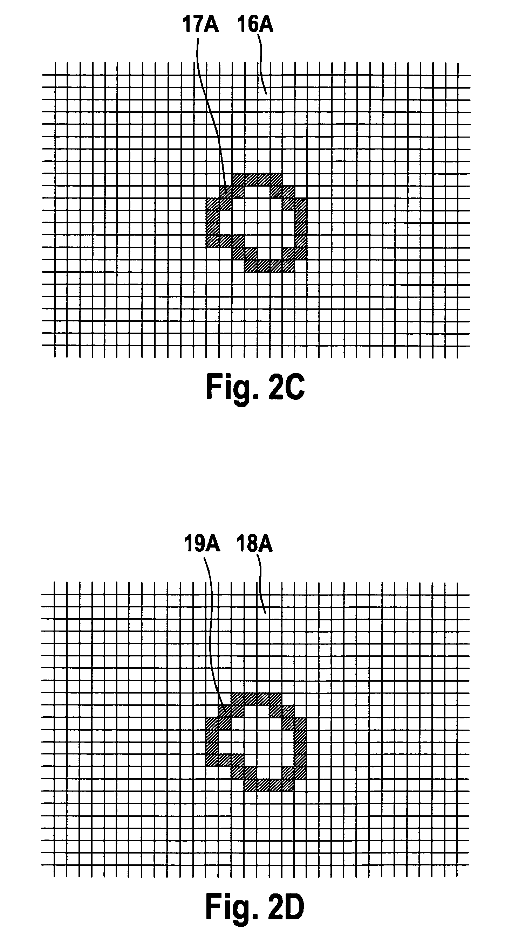

Im Schritt S2 erzeugt die Auswertungsvorrichtung 11 ein Kantenbild Kb1 aus dem ersten optischen Abbild Ab1. Zur Erzeugung des Kantenbilds Kb1 verwendet die Auswertungsvorrichtung 11 einen aus der Bildverarbeitung bekannten Filter wie zum Beispiel den Canny-Filter, der alle Pixel als Kanten auffaßt, deren Kantenstärken über einen gewissen Schwellwert liegen. Ein Ausschnitt des Kantenbilds Kb1 ist in FIG. 2C dargestellt. Die Kanten des abgebildeten Objekts 13A sind mit dem Bezugszeichen 17A bezeichnet. Der Pixel 16A entspricht dem Pixel 12A aus FIG. 2A.

Im Schritt S3 wird das Kantenbild Kb1 analysiert, um festzustellen, ob es sich bei einem abgebildeten Objekt um einen Regentropfen handelt. Ein weiterer Ausschnitt des ersten optischen Abbilds Ab1, welches einen abgebildeten Regentropfen 13C aufweist, ist in FIG. 4A dargestellt. Einer der Bildpunkte des Ausschnitts ist mit dem Bezugszeichen 12C bezeichnet. FIG. 4B zeigt ein entsprechendes Kantenbild des abgebildeten Regentropfens 13c aus FIG. 4A. Die Kanten des abgebildeten Regentropfen 13C sind mit dem Bezugszeichen 17C bezeichnet Der Pixel 16C entspricht dem Pixel 12C aus FIG. 2A. Die Kanten 17C des abgebildeten Regentropfen 13C haben eine Ringstruktur, welche für einen abgebildeten Regentropfen charakteristisch ist. Die Ringstruktur entsteht dadurch, daß der Regentropfen an sich durchsichtig ist und Licht aufgrund der Form des Regentropfens an seinem Rand zu der Kamera 9 hin stark gebrochen wird.

Im Schritt S4 entscheidet die Auswertungsvorrichtung 11, ob es sich bei dem abgebildeten Objekt um einen Regentropfen handelt oder nicht. Wenn es sich bei dem abgebildeten Objekt um einen Regentropfen handelt, gibt die Auswertungsvorrichtung 11 im Schritt S12 einen Scheibenwischerbetätigungsbefehl an die Motorsteuerung 5 aus, die daraufhin ihrerseits den Scheibenwischermotor 4 veranlaßt, den Scheibenwischer 2 zu betätigen. Das Steuerungsverfahren wird dann mit Schritt S13 fortgesetzt. Wenn es sich bei dem abgebildeten Objekt nicht um einen Regentropfen handelt, nimmt die Kamera 9 ein zweites Abbild Ab2 zu einem zweiten Zeitpunkt t2 auf (Schritt S5). Fig. 2B zeigt einen Ausschnitt des zweiten optischen Abbilds Ab2. Einer der Bildpunkte, welcher dem Bildpunkt 12A entspricht ist, ist mit dem Bezugszeichen 14A bezeichnet. Ein abgebildetes Objekt, welches mit dem abgebildeten Objekt 13A identisch ist, ist mit dem Bezugszeichen 15A bezeichnet.

Im Schritt S6 erzeugt die Auswertungsvorrichtung 11 ein Kantenbild Kb2 aus dem zweiten optischen Abbild Ab2. FIG. 2D zeigt einen Ausschnitt des Kantenbilds Kb2 der zweiten optischen Abbilds Ab2 aus FIG. 2B. Die Kanten des abgebildeten Objekts 15A sind mit dem Bezugszeichen 19A bezeichnet. Der Pixel 18a entspricht dem Pixel 14A aus FIG. 2A.

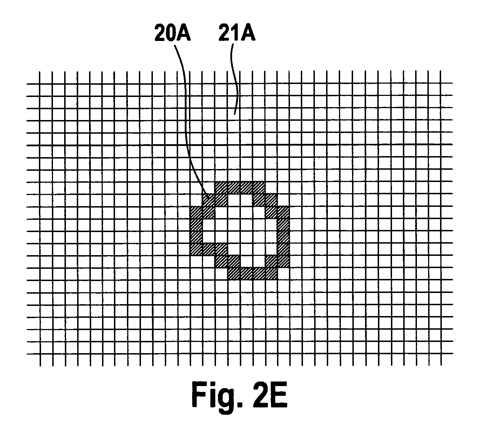

Die Auswertungsvorrichtung 11 multipliziert dann im Schritt S7 jeweils ein Pixel des Kantenbilds Kb1 mit einem entsprechenden Pixel des Kantenbilds Kb2, um ein erstes Multiplika-Lionsbild Mb1 zu erhalten. FIG. 2E zeigt einen Ausschnitt des ersten Multiplikationsbilds Mb1 des Kantenbilds Kb1 und des Kantenbilds Kb2. Einer der Bildpunkte, welcher den Bildpunkten 16A und 18A entspricht, ist mit dem Bezugszeichen 21A bezeichnet.

Weil das Objekt, welches als 13A bzw. 15A abgebildet wird, zum Beispiel ein Schmutzfleck auf der Windschutzscheibe 1 ist, ist das Abbild des Objekts statisch in einem bestimmten Abbildungsbereich angeordnet. Daher entspricht eine Struktur 20A des Multiplikationsbilds jeweils auch dem abgebildeten Objekt 17A bzw. 19A. Die Auswertungsvorrichtung 11 überprüft in Schritt S8, ob zumindest ein Punkt des Multiplikationsbilds Mb1 ungleich null ist, oder alternativ, ob eine Struktur des Multiplikationsbilds mit den abgebildeten Objekten übereinstimmt. Wenn dies der Fall ist, gibt die Auswertungsvorrichtung 11 im Schritt S9 einen Scheibenwischerbetätigungsbefehl an die Motorsteuerung 4 und einen Reinigungsmittelabgabebefehl an die Abgabevorrichtungssteuerung 8 aus. Das Steuerungsverfahren kann auch so ausgebildet sein, daß der Scheibenwischer 2 nicht schon durch einen einzelnen erkannten Regentropfen ausgelöst wird. Zusätzlich kann auch die Frequenz des Scheibenwischers 2 abhängig von der Anzahl der erfaßten Regentropen gesteuert werden. Der Scheibenwischer und die Reinigungsmittelabgabevorrichtung können ebenfalls auch erst ab einer bestimmten Anzahl von Flecken ausgelöst werden.

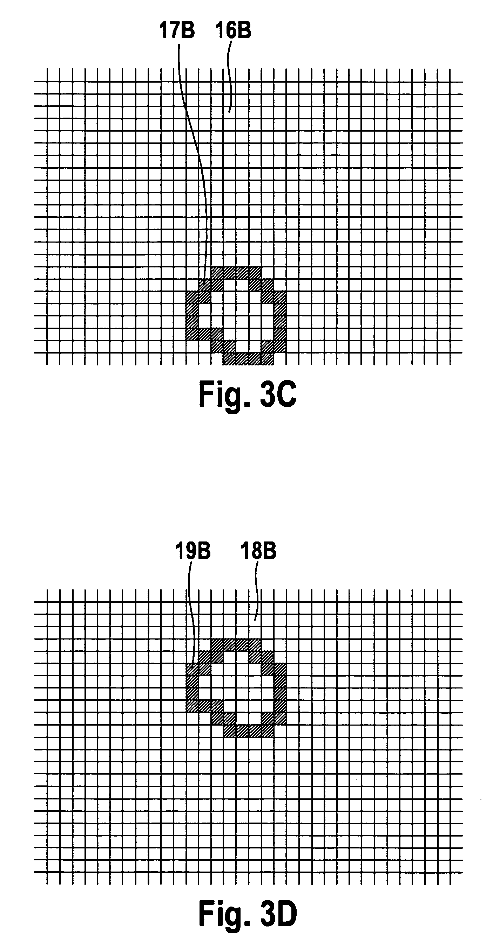

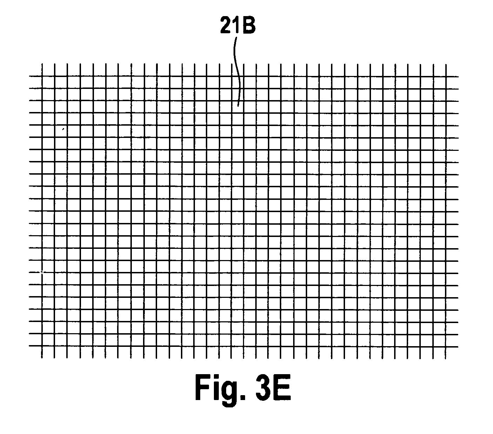

FIG. 3A und FIG. 3B zeigen einen weiteren Ausschnitt des ersten optischen Abbilds Ab1 bzw. des zweiten optischen Abbilds Ab2. Diese weiteren Ausschnitte werden parallel zu den anderen Ausschnitten des gleichen optischen Abbilds verarbeitet. Einer der Bildpunkte des weiteren Ausschnitts des ersten optischen Abbilds Ab1 ist mit dem Bezugszeichen 12B bezeichnet. Ein abgebildetes Objekt des weiteren Ausschnitts des ersten optischen Abbilds Ab1 ist mit dem Bezugszeichen 13B bezeichnet. Einer der Bildpunkte des weiteren Ausschnitts des zweiten optischen Abbilds Ab2 ist mit dem Bezugszeichen 14B bezeichnet. Ein abgebildetes Objekt des weiteren Ausschnitts des zweiten optischen Abbilds Ab2 ist mit dem Bezugszeichen 15B bezeichnet. FIG. 3C zeigt ein Kantenbild des weiteren Ausschnitts des ersten optischen Abbilds aus FIG. 3A. Die Kanten des abgebildeten Objekts 13B sind mit dem Bezugszeichen 17B bezeichnet. Der Bildpunkt 16B entspricht dem Bildpunkt 12B aus FIG. 2A. FIG. 3D zeigt ein Kantenbild des weiteren Ausschnitts des zweiten optischen Abbilds aus FIG. 3B. Die Kanten des abgebildeten Objekts 15B sind mit dem Bezugszeichen 19B bezeichnet. Der Bildpunkt 18B entspricht dem Bildpunkt 14B aus FIG. 2B. FIG. 3E zeigt ein zweites Multiplikationsbild Mb2 des Kantenbilds aus FIG. 3C und des Kantenbilds aus FIG. 3D. Einer der Bildpunkte, welcher den Bildpunkten 16B und 18B entspricht, ist mit dem Bezugszeichen 21B bezeichnet. Weil das Objekt, welches als 13B bzw. 15B abgebildet wird, sich relativ zu dem Abbildungsbereich bewegt, ist jeder Punkt des zweiten Multiplikationsbilds Mb2 gleich null. Die Auswertungsvorrichtung 11 überprüft im Schritt S8 parallel, ob zumindest ein Punkt des Multiplikationsbilds Mb2 ungleich null oder ob eine Struktur des zweiten Multiplikationsbilds Mb2 mit den abgebildeten Objekten übereinstimmt. Dies ist nicht der Fall. Die Auswertungsvorrichtung 11 gibt daher keinen Scheibenwischerbetätigungsbefehl an die Motorsteuerung 4 und keinen Reinigungsmittelabgabebefehl an die Abgabevorrichtungssteuerung 8 aufgrund des sich bewegenden Objekts aus.

Im Schritt S10 nimmt die Kamera ein drittes Abbild Ab3 zu einem Zeitpunkt t3 auf. Aus dem dritten Abbild Ab3 erzeugt die Kamera 9 ein drittes Kantenbild Kb3 von Ab3 (Schritt S11). Durch Multiplikation von Kb1 mit Kb3 erzeugt die Auswertungsvorrichtung ein zweites Multiplikationsbild Mb2 im Schritt S13. Die Auswertungsvorrichtung 11 überprüft im Schritt S14, ob zumindest ein Punkt des zweiten Multiplikationsbilds Mb2 ungleich null ist oder ob eine Struktur des zweites Multiplikationsbilds Mb2 mit dem abgebildeten Objekten übereinstimmt. Wenn dies der Fall ist, markiert die Auswertungsvorrichtung 11 das Objekt, den übereinstimmenden Punkt oder die übereinstimmende Struktur (Schritt S15). Das Objekt, der übereinstimmende Punkt oder die übereinstimmende Struktur werden dann bei einer wiederholten Ausführung des Verfahrens bei der Analyse im Schritt S3 und bei der Erzeugung der Multiplikationsbilder Mb1 und Mb2 nicht berücksichtigt. Sie werden also weder als Regentropfen noch als statisches Objekt angesehen.

## Patentansprüche

1. Steuerungsverfahren für eine Scheibenwischvorrichtung mit den folgenden Schritten:
- Erzeugen (S1) eines ersten optischen Abbilds (Ab1) eines Abbildungsbereichs zu einer ersten Zeit (t1);
- Erzeugen (S2) eines zweiten optischen Abbilds (Ab2) des Abbildungsbereichs zu einer zweiten Zeit (t2);
- Vergleichen (S7) des ersten optischen Abbilds (b1) mit dem zweiten optischen Abbild (Ab2); **gekennzeichnet durch** die zusätzlichen Schritte:
- Erzeugen eines dritten optischen Abbilds (Ab3) des Abbildungsbereichs zu einer dritten Zeit (t3) nach einer Betätigung eines Scheibenwischers;
- Vergleichen (S13) des dritten optischen Abbilds (Ab3) mit dem ersten optischen Abbild (Ab1) zum Erkennen eines Objekts, welches sowohl in dem dritten optischen Abbild als auch in dem ersten optischen Abbild (Ab1) abgebildet ist; und
- Ausgeben (S9) eines Scheibenwischerbetätigungsbefehls in Abhängigkeit von einem Ergebnis des Vergleichens ohne Berücksichtigung des Objekts.

2. Steuerungsverfahren nach Anspruch 1, **dadurch gekennzeichnet, daß** ein erstes Kantenbild (Kb1) aus dem ersten optischen Abbild (Ab1) erzeugt wird, und daß ein zweites Kantenbild (Kb2) aus dem zweiten optischen Abbild (Ab2) erzeugt wird.

3. Steuerungsverfahren nach Anspruch 2, **dadurch gekennzeichnet, daß** das erste optische Abbild (Ab1) und das zweite optische Abbild (Ab2) in Form von Bildpunkten gespeichert sind, und daß das erste Kantenbild (kb1) und das zweite Kantenbild (Kb2) in Form von Bildpunkten gespeichert sind.

4. Steuerungsverfahren nach Anspruch 3, **dadurch gekennzeichnet, daß** beim Schritt des Vergleichens (S7) jeweils ein Bildpunkt des ersten Kantenbilds (Kb1) mit einem entsprechenden Bildpunkt des zweiten Kantenbilds (Kb2) multipliziert wird.

5. Steuerungsverfahren nach Anspruch 4, **dadurch gekennzeichnet, dass** durch Multiplikation des ersten Kantenbilds (Kb1) mit dem dritten Kantenbild (Kb3) erzeugt eine Auswertungsvorrichtung ein zweites Multiplikationsbild (Mb2) (S13), wobei die Auswertungsvorrichtung (11) überprüft (S14), ob zumindest ein Punkt des zweiten Multiplikationsbilds (Mb2) ungleich null ist oder ob eine Struktur des zweites Multiplikationsbilds (Mb2) mit dem abgebildeten Objekten übereinstimmt.

6. Steuerungsverfahren nach Anspruch 3 bis 5, **gekennzeichnet durch** die folgenden weiteren Schritte:
- Analysieren (S3) eines abgebildeten Objekts, um zu erkennen, ob das Objekt ein Regentropfen ist oder nicht; und
- Ausgeben (S12) eines Reinigungsmittelabgabebefehls in Abhängigkeit von einem Ergebnis des Analysierens.

7. Steuerungsvorrichtung für eine Scheibenwischvorrichtung, **dadurch gekennzeichnet, daß** die Steuerungsvorrichtung (11) eingerichtet ist, das Verfahren nach einem der Ansprüche 1 bis 6 durchzuführen.

## Claims

1. Control method for a windscreen wiper device, having the following steps:
- producing (S1) a first optical image (Ab1) of an imaging area at a first time (t1);
- producing (S2) a second optical image (Ab2) of the imaging area at a second time (t2);
- comparing (S7) the first optical image (b1) with the second optical image (Ab2);
**characterized by** the additional steps of:
- producing a third optical image (Ab3) of the imaging area at a third time (t3) after an actuation of a windscreen wiper;
- comparing (S13) the third optical image (Ab3) with the first optical image (Ab1) in order to detect an object which is imaged both in the third optical image and in the first optical image (Ab1); and
- outputting (S9) a windscreen wiper actuation command as a function of a result of the comparison without consideration of the object.

2. Control method according to Claim 1, **characterized in that** a first edge image (Kb1) is produced from the first optical image (Ab1), and **in that** a second edge image (Kb2) is produced from the second optical image (Ab2).

3. Control method according to Claim 2, **characterized in that** the first optical image (Ab1) and the second optical image (Ab2) are stored in the form of pixels, and **in that** the first edge image (Kb1) and the second edge image (Kb2) are stored in the form of pixels.

4. Control method according to Claim 3, **characterized in that** in the step of comparison (S7) a pixel of the first edge image (Kb1) is respectively multiplied by a corresponding pixel of the second edge image (Kb2).

5. Control method according to Claim 4, **characterized in that** by multiplying the first edge image (Kb1) by the third edge image (Kb3) an evaluation device produces a second multiplication image (Mb2) (S13), the evaluation device (11) checking (S14) whether at least one point of the second multiplication image (Mb2) is not equal to zero, or whether a structure of the second multiplication image (Mb2) corresponds to the imaged object.

6. Control method according to Claims 3 to 5, **characterized by** the following further steps:
- analysing (S3) an imaged object in order to detect whether the object is a raindrop or not; and
- outputting (S12) a cleaning agent dispensing command as a function of a result of the analysis.

7. Control device for a windscreen wiper device, **characterized in that** the control device (11) is set up to carry out the method according to one of Claims 1 to 6.

## Revendications

1. Procédé de commande pour un dispositif d'essuie-glace présentant les étapes suivantes :
- production (S1) d'une première reproduction optique (Ab1) d'une zone de reproduction à un premier instant (t1) ;
- production (S2) d'une deuxième reproduction optique (Ab2) de la zone de reproduction à un deuxième instant (t2) ;
- comparaison (S7) de la première reproduction optique (b1) avec la deuxième reproduction optique (Ab2) ;
**caractérisé par** les étapes supplémentaires :
- production d'une troisième reproduction optique (Ab3) de la zone de reproduction à un troisième instant (t3) après un actionnement d'un essuie-glace ;
- comparaison (S13) de la troisième reproduction optique (Ab3) avec la première reproduction optique (Ab1) de reconnaissance d'un objet, reproduit tant dans la troisième reproduction optique que dans la première reproduction optique (Ab1) ; et
- émission (S9) d'un ordre d'actionnement d'essuie-glace en fonction d'un résultat de la comparaison sans prise en compte de l'objet.

2. Procédé de commande selon la revendication 1, **caractérisé en ce qu'**une première image de bordure (Kb1) est produite à partir de la première reproduction optique (Ab1) et qu'une deuxième image de bordure (Kb2) est produite à partir de la deuxième reproduction optique (Ab2).

3. Procédé de commande selon la revendication 2, **caractérisé en ce que** la première reproduction optique (Ab1) et la deuxième reproduction optique (Ab2) sont mémorisées sous forme de pixels et que la première image de bordure (kb1) et la deuxième image de bordure (Kb2) sont mémorisées sous forme de pixels.

4. Procédé de commande selon la revendication 3, **caractérisé en ce que** lors de l'étape de comparaison (S7), un pixel de la première image de bordure (Kb1) est respectivement multiplié par un pixel correspondant de la deuxième image de bordure (Kb2).

5. Procédé de commande selon la revendication 4, **caractérisé en ce que** la multiplication de la première image de bordure (Kb1) par la troisième image de bordure (Kb3) permet à un dispositif d'analyse de produire une deuxième image multipliée (Mb2) (S13), le dispositif d'analyse (11) contrôlant (S14) si au moins un point de la deuxième image multipliée (Mb2) est différent de zéro ou si une structure de la deuxième image multipliée (Mb2) coïncide avec l'objet reproduit.

6. Procédé de commande selon l'une quelconque des revendications 3 à 5, **caractérisé par** les étapes supplémentaires suivantes :
- analyse (S3) d'un objet reproduit pour identifier si l'objet est ou non une goutte de pluie ; et
- émission (S12) d'un ordre d'envoi de moyen de nettoyage en fonction d'un résultat de l'analyse.

7. Dispositif de commande pour dispositif d'essuie-glace, **caractérisé en ce que** le dispositif de commande (11) est conçu pour mettre en oeuvre le procédé selon l'une quelconque des revendications 1 à 6.
